# FASCICULE DE BREVET EUROPEEN

(11) **EP 2 279 109 B1**
(45) Date de publication et mention de la délivrance du brevet: **20.09.2017**
(21) Numéro de dépôt: 09729509.1
(22) Date de dépôt: 05.03.2009
(51) Int. Cl.: B62D 65/02, B62D 25/06

(54) **AGENCEMENT POUR LA MISE EN POSITION D'UN PAVILLON SUR UNE CAISSE**
VORRICHTUNG ZUR POSITIONIERUNG EINES DACHS AUF EINEM ELEMENT
APPARATUS FOR POSITIONING A ROOF ON A BODY

(30) Priorité: 10.04.2008 FR 0852398
(43) Date de publication de la demande: 02.02.2011
(73) Titulaire: Renault s.a.s., 92100 Boulogne-Billancourt (FR)
(72) Inventeur: DELARUE, Pascal, F-78540 Vernouillet (FR); TAVAKOLI, Shohreh, F-91190 Gif sur Yvette (FR); BERNADOTTE, Jean-Pierre, F-91600 Savigny sur Orge (FR)
(86) Numéro de dépôt international: PCT/FR2009/050354
(87) Numéro de publication internationale: WO 2009/125097

(56) Documents cités:
- EP-A- 1 291 271
- DE-A1- 19 643 407
- DE-A1- 19 817 056

## Description

L'invention concerne un agencement pour la mise en position, préalablement à sa fixation, d'un pavillon sur une caisse d'un véhicule automobile.

L'invention concerne plus particulièrement un agencement pour la mise en position, préalablement à sa fixation, d'un pavillon sur une caisse d'un véhicule automobile comportant au moins une traverse arrière, une traverse avant et deux côtés latéraux, qui comporte au moins un dispositif de préhension du pavillon destiné à mettre en position le pavillon sur la caisse du véhicule.

On connaît de nombreux exemples d'agencements de ce type, qui ne permettent qu'un centrage approximatif du pavillon sur la caisse du véhicule automobile, ce centrage étant réalisé manuellement préalablement au soudage du pavillon sur la caisse du véhicule. Le document DE19817056-A1 décrit un tel agencement tel que décrit par le préambule de la revendication 1. Il en résulte une grande disparité dans l'assemblage des pavillons équipant des véhicules issus d'une même chaîne de fabrication.

L'invention remédie à cet inconvénient en proposant un agencement pour la mise en position d'un pavillon de toit sur une caisse selon la revendication 1 ainsi qu'un procédé d'assemblage d'un pavillon de toit par rapport à une caisse de véhicule automobile selon la revendication 6. Dans ce but, l'invention propose un agencement du type décrit précédemment, caractérisé en ce qu'il comporte une coiffe, portant le dispositif de préhension du pavillon, et un dispositif de centrage avant assemblage comportant :
- un dispositif d'indexation fixe par rapport à une position déterminée sur la traverse arrière,
- un dispositif de centrage par rapport aux côtés latéraux qui est agencé sensiblement au niveau de la traverse avant,
- l'agencement comporte quatre poteaux, agencés deux à deux de part et d'autre de la caisse, qui sont destinés, avant l'assemblage et pendant le centrage du pavillon, à supporter une structure de soutien sous laquelle la coiffe est montée mobile verticalement,
- la coiffe est montée mobile verticalement par rapport à la structure de soutien par l'intermédiaire de vérins,
- le dispositif d'indexation fixe par rapport à la traverse arrière comporte au moins un pion vertical, solidaire de la coiffe, qui est destiné à pénétrer dans un perçage vertical porté par la traverse arrière, la coiffe portant le dispositif d'indexation fixe,
- le dispositif de centrage comporte au moins deux éléments, susceptibles de s'étendre transversalement simultanément à partir d'un point central avant de la coiffe de la caisse,
- les éléments sont constitués de deux biellettes de même longueur dont des premières extrémités extérieures sont destinées à prendre appui sur les côtés latéraux de la caisse, et dont des secondes extrémités intérieures sont liées à deux extrémités diamétralement opposées d'un élément rotatif dont l'axe est sensiblement centré sur l'extrémité avant de la coiffe.

L'invention propose aussi un procédé de d'assemblage d'un pavillon par rapport à une caisse de véhicule automobile comportant au moins une traverse arrière, une traverse avant et deux côtés latéraux, mettant en oeuvre un agencement du type décrit précédemment, caractérisé en ce qu'il comporte :
- une première étape au cours de laquelle on fixe un pavillon sous une coiffe montée mobile verticalement par rapport à une structure de soutien et porteuse d'un dispositif d'indexation fixe par rapport à une position déterminée sur la traverse arrière, et d'un dispositif de centrage par rapport au côtés latéraux agencé sensiblement au niveau de la traverse avant,
- une deuxième étape au cours de laquelle on déplace la coiffe pour qu'elle repose sur quatre poteaux agencés deux à deux de part et d'autre de la caisse,
- une troisième étape au cours de laquelle on positionne la coiffe par rapport à la traverse arrière à l'aide du dispositif d'indexation,
- une quatrième étape au cours de laquelle on centre la coiffe à l'aide du dispositif de centrage,
- une cinquième étape au cours de laquelle on descend le pavillon sur la caisse en descendant la coiffe par rapport à la structure de soutien,
- une sixième étape au cours de laquelle on assemble le pavillon à la caisse.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues de dessus d'un agencement au cours de la deuxième étape du procédé,
- la figure 3 est une vue de dessus d'un agencement au cours de la quatrième étape du procédé,
- la figure 4 est une vue de côté d'un agencement selon l'invention au cours de la deuxième étape du procédé,
- la figure 5 est une vue de côté d'un agencement selon l'invention au cours de la troisième étape du procédé.

Dans la description qui va suivre, des chiffres de référence identiques désignent des pièces identiques ou ayant des fonctions similaires.

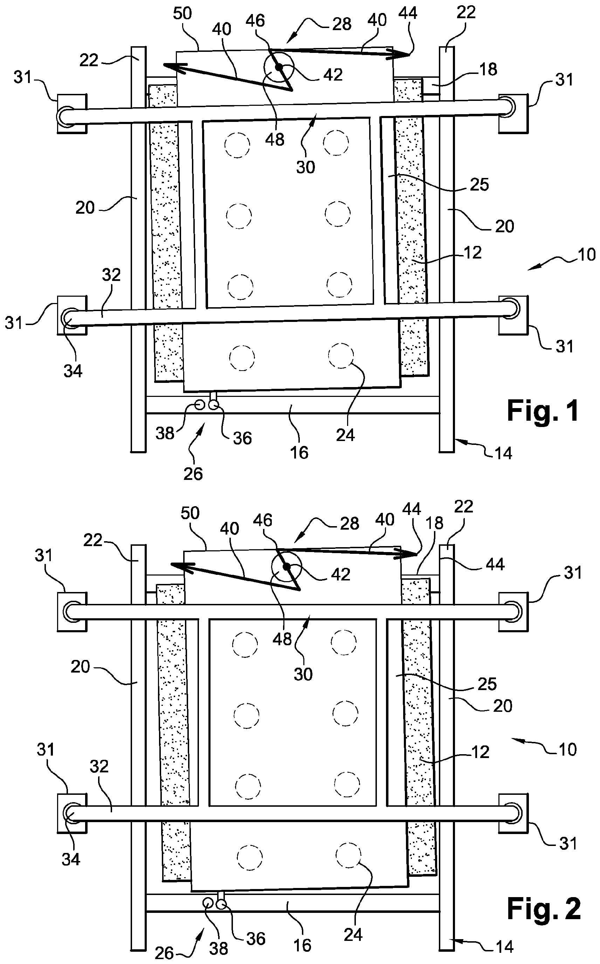

On a représenté à la figure 1 un agencement 10 pour la mise en position, préalablement à sa fixation, d'un pavillon 12 sur une caisse 14 d'un véhicule automobile.

De manière connue, la caisse 14 comporte au moins une traverse arrière 16, une traverse avant 18 et deux côtés latéraux 20, se prolongeant par exemple vers l'avant du véhicule par deux montants de pare-brise 22.

De manière connue, l'agencement 10 comporte au moins un dispositif de préhension du pavillon, par exemple un dispositif à ventouses 24, qui est destiné à mettre en position le pavillon 12 sur la caisse 14 du véhicule.

Conformément à l'invention, pour permettre un centrage du pavillon 12 sur la caisse 14 préalablement à une opération de soudage visant à solidariser le pavillon 12 à la caisse 14, l'agencement 10 comporte une coiffe 25, portant le dispositif de préhension du pavillon à ventouses 24, et un dispositif de centrage avant assemblage comportant :
- un dispositif 26 d'indexation fixe par rapport à une position déterminée sur la traverse arrière 16,
- un dispositif 28 de centrage par rapport aux côtés latéraux 20 qui est agencé sensiblement au niveau de la traverse avant 18.

Plus particulièrement, l'agencement 10 comporte quatre poteaux 31, agencés deux à deux de part et d'autre de la caisse 14, qui sont destinés, avant l'assemblage et pendant le centrage du pavillon 12, à supporter une structure 30 de soutien sous laquelle la coiffe 25 est montée mobile verticalement.

L'interface entre les extrémités des poteaux 31 et la structure 30 de soutien est par exemple réalisé par l'intermédiaire de douilles à billes (non représentées) qui sont destinées à recevoir les extrémités 34 de quatre bras 32 s'étendant deux à deux de part et d'autre de la structure 30 de soutien.

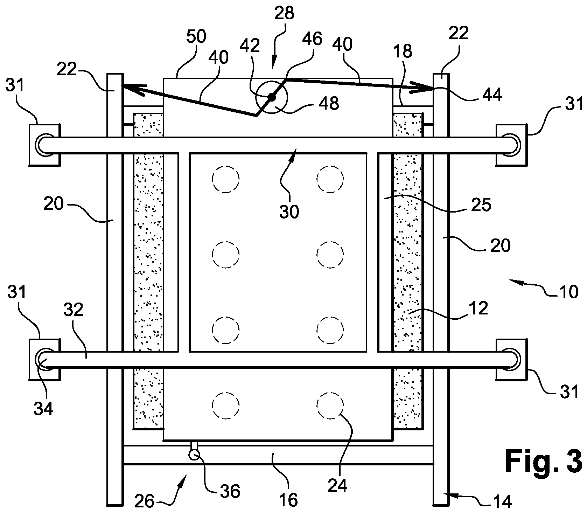

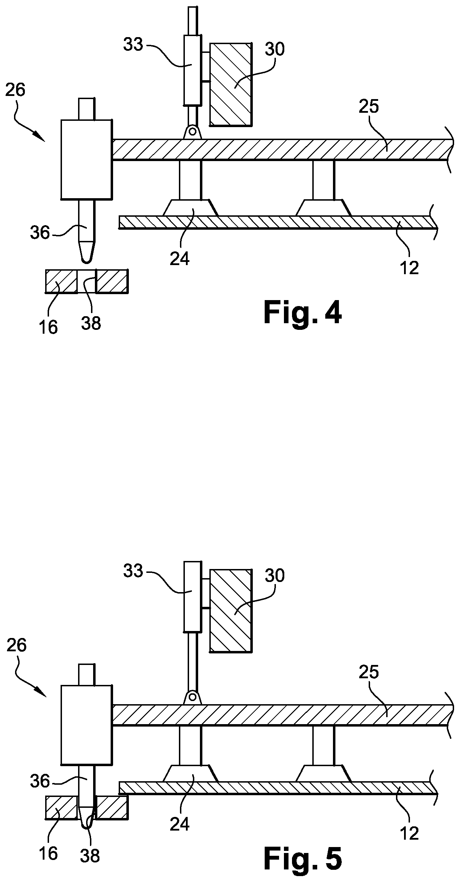

Par ailleurs, la coiffe 25 est montée mobile verticalement par rapport à la structure de soutien 30, par exemple par l'intermédiaire de vérins 33, représentés aux figures 3 et 4, ceci afin de permettre la mise en position du pavillon 12 sur la caisse 14.

Avantageusement, la mobilité verticale de la coiffe 25 permet aussi de mettre en oeuvre le dispositif 26 d'indexation fixe.

En effet, le dispositif 26 d'indexation fixe par rapport à la traverse arrière 16 comporte au moins un pion vertical 36, solidaire de la coiffe 25, qui est destiné à pénétrer dans un perçage vertical 38 porté par la traverse arrière 16.

Le perçage 38 n'est pas nécessairement agencé au centre de la traverse 16, mais peut être excentré, comme représenté à la figure 1.

Par ailleurs, le dispositif de centrage 28 comporte au moins deux éléments 40, susceptibles de s'étendre transversalement simultanément à partir d'un point central avant 42 de la coiffe 25, pour centrer le pavillon 12 par rapport aux côtés latéraux 20 de la caisse 14.

Par exemple, les éléments 40 sont constitués de deux biellettes 40 de même longueur dont des premières extrémités extérieures 44 sont destinées à prendre appui sur les côtés latéraux 20 de la caisse, et dont des secondes extrémités intérieures 46 sont liées à deux extrémités diamétralement opposées d'un élément rotatif 48 dont l'axe est sensiblement centré sur une extrémité avant 50 de la coiffe 25.

De préférence, les premières extrémités 44 des éléments 40 seront destinées à prendre appui sur les montants 22 de pare-brise des côtés latéraux 20.

Dans cette configuration, un procédé d'assemblage d'un pavillon 12 par rapport une caisse de véhicule automobile comportant au moins une traverse arrière 16, une traverse avant 18 et deux côtés latéraux 20 comporte au moins :
- une première étape (non représentée) au cours de laquelle on fixe un pavillon 12 sous une coiffe 25 montée mobile verticalement par rapport à une structure 30 de soutien et porteuse d'un dispositif d'indexation fixe 26 par rapport à une position déterminée sur la traverse arrière 16, et d'un dispositif 28 de centrage par rapport au côtés latéraux 20 agencé sensiblement au niveau de la traverse avant 18,
- une deuxième étape, représentée aux figures 2 et 3, au cours de laquelle on déplace la coiffe 25 et la structure de soutien 30 pour qu'elle repose sur quatre poteaux 31 agencés deux à deux de part et d'autre de la caisse 14,
- une troisième étape, représentée à la figure 4, au cours de laquelle on positionne la coiffe 25 par rapport à la traverse arrière 16 à l'aide du dispositif d'indexation 26, notamment en faisant pénétrer le pion 36 dans le perçage 38,
- une quatrième étape au cours de laquelle on centre la coiffe à l'aide du dispositif de centrage 28, comme représenté à la figure 3,
- une cinquième étape (non représentée) au cours de laquelle on descend le pavillon 12 sur la caisse 14 descendant la coiffe 25 par rapport à la structure 30 de soutien,
- une sixième étape (non représentée) au cours de laquelle on assemble le pavillon 12 à la caisse 14.

L'invention permet donc de réaliser l'assemblage d'un pavillon 12 à une caisse 14 en éliminant tout défaut de centrage.

## Revendications

1. Agencement (10) pour la mise en position, préalablement à sa fixation, d'un pavillon (12) sur une caisse (14) d'un véhicule automobile,
la caisse comportant au moins une traverse arrière (16), une traverse avant (18) et deux côtés latéraux (20),
l'agencement comporte au moins un dispositif de préhension du pavillon destiné à mettre en position le pavillon (12) sur la caisse (14) du véhicule, une coiffe (25), portant le dispositif de préhension du pavillon, et un dispositif de centrage avant assemblage comportant :
- un dispositif (26) d'indexation fixe par rapport à une position déterminée sur la traverse arrière (16),
l'agencement pour la mise en position étant **caractérisé en ce qu'**il comporte :
- un dispositif (28) de centrage par rapport aux côtés latéraux (20) qui est agencé sensiblement au niveau de la traverse avant (18), et **en ce qu'**il comporte quatre poteaux (31), agencés deux à deux de part et d'autre de la caisse (14), qui sont destinés, avant l'assemblage et pendant le centrage du pavillon (12), à supporter une structure (30) de soutien sous laquelle la coiffe (25) est montée mobile verticalement.

2. Agencement (10) selon la revendication précédente, **caractérisé en ce que** la coiffe (25) est montée mobile verticalement par rapport à la structure de soutien (30) par l'intermédiaire de vérins (33).

3. Agencement (10) selon l'une des revendications précédentes, **caractérisé en ce que** le dispositif (26) d'indexation fixe par rapport à la traverse arrière (16) comporte au moins un pion vertical (36), solidaire de la coiffe (25), qui est destiné à pénétrer dans un perçage vertical (38) porté par la traverse arrière (16), la coiffe (25) portant le dispositif (26) d'indexation fixe.

4. Agencement (10) selon l'une des revendications précédentes, **caractérisé en ce que** le dispositif (28) de centrage comporte au moins deux éléments (40), susceptibles de s'étendre transversalement simultanément à partir d'un point central avant (42) de la coiffe (25), pour centrer le pavillon (12) par rapport aux côtés latéraux (20) de la caisse (14).

5. Agencement (10) selon la revendication précédente, **caractérisé en ce que** les éléments (40) sont constitués de deux biellettes (40) de même longueur dont des premières extrémités extérieures (44) sont destinées à prendre appui sur les côtés latéraux (20) de la caisse, et dont des secondes extrémités (46) intérieures sont liées à deux extrémités diamétralement opposées d'un élément rotatif (48) dont l'axe est sensiblement centré sur une extrémité avant (50) de la coiffe (25).

6. Procédé d'assemblage d'un pavillon (12) par rapport à une caisse (14) de véhicule automobile comportant au moins une traverse arrière (16), une traverse avant (18) et deux côtés latéraux (20), **caractérisé en ce qu'**il comporte :
- une première étape au cours de laquelle on fixe un pavillon (12) sous une coiffe (25) montée mobile verticalement par rapport à une structure (30) de soutien et porteuse d'un dispositif d'indexation fixe (26) par rapport à une position déterminée sur la traverse arrière (16), et d'un dispositif de centrage (28) par rapport aux côtés latéraux (20) agencé sensiblement au niveau de la traverse avant (18),
- une deuxième étape au cours de laquelle on déplace la coiffe (25) pour qu'elle repose sur quatre poteaux (31) agencés deux à deux de part et d'autre de la caisse (14),
- une troisième étape au cours de laquelle on positionne la coiffe (25) par rapport à la traverse arrière (16) à l'aide du dispositif d'indexation (26),
- une quatrième étape au cours de laquelle on centre la coiffe (25) à l'aide du dispositif de centrage (28),
- une cinquième étape au cours de laquelle on descend le pavillon (12) sur la caisse (14) en descendant la coiffe (25) par rapport à la structure (30) de soutien,
- une sixième étape au cours de laquelle on assemble le pavillon (12) à la caisse (14).

## Patentansprüche

1. Vorrichtung (10) zur Positionierung eines Daches (12) auf einer Karosserie (14) eines Kraftfahrzeugs vor seiner Befestigung,
wobei die Karosserie mindestens eine hintere Querstrebe (16), eine vordere Querstrebe (18) und zwei Seitenflächen (20) umfasst,
wobei die Vorrichtung mindestens eine Greifeinrichtung des Daches, die dazu bestimmt ist, das Dach (12) auf der Karosserie (14) des Fahrzeugs zu positionieren, eine Abdeckung (25), die die Greifeinrichtung des Daches trägt, und eine Einrichtung zum Zentrieren vor dem Zusammenbau aufweist, umfassend:
- eine Einrichtung (26) zur fixen Indexierung in Bezug zu einer bestimmten Position auf der hinteren Querstrebe (16),
wobei die Vorrichtung zur Positionierung **dadurch gekennzeichnet ist, dass** sie umfasst:
- eine Einrichtung (28) zum Zentrieren in Bezug zu den Seitenflächen (20), die im Wesentlichen im Bereich der vorderen Querstrebe (18) angeordnet ist,
dass sie vier Pfosten (31) umfasst, die zwei und zwei beiderseits der Karosserie (14) angeordnet sind, die dazu bestimmt sind, vor dem Zusammenbau und während des Zentrierens des Daches (12) eine Stützstruktur (30) zu tragen, unter der die Abdeckung (25) vertikal beweglich montiert ist.

2. Vorrichtung (10) nach dem vorhergehenden Anspruch, **dadurch gekennzeichnet, dass** die Abdeckung (25) in Bezug zu der Stützstruktur (30) mit Hilfe von Zylindern (33) vertikal beweglich montiert ist.

3. Vorrichtung (10) nach einem der vorhergehenden Ansprüche, **dadurch gekennzeichnet, dass** die Einrichtung (26) zur fixen Indexierung in Bezug zur hinteren Querstrebe (16) mindestens einen vertikalen Zapfen (36) umfasst, der mit der Abdeckung (25) fest verbunden ist, der dazu bestimmt ist, in eine vertikale Bohrung (38) einzudringen, die von der hinteren Querstrebe (16) getragen wird, wobei die Abdeckung (25) die Einrichtung (26) zur fixen Indexierung trägt.

4. Vorrichtung (10) nach einem der vorhergehenden Ansprüche, **dadurch gekennzeichnet, dass** die Zentriereinrichtung (28) mindestens zwei Elemente (40) umfasst, die geeignet sind, sich quer gleichzeitig von einem zentralen vorderen Punkt (42) der Abdeckung (25) aus zu erstrecken, um das Dach (12) in Bezug zu den Seitenflächen (20) der Karosserie (14) zu zentrieren.

5. Vorrichtung (10) nach dem vorhergehenden Anspruch, **dadurch gekennzeichnet, dass** die Elemente (40) von zwei Stangen (40) derselben Länge gebildet sind, deren erste äußere Enden (44) dazu bestimmt sind, auf den Seitenflächen (20) der Karosserie aufzuliegen, und deren zweite innere Enden (46) mit zwei diametral gegenüberliegenden Enden eines drehbaren Elements (48) verbunden sind, dessen Achse im Wesentlichen auf einem vorderen Ende (50) der Abdeckung (25) zentriert ist.

6. Verfahren zur Montage eines Daches (12) in Bezug zu einer Karosserie (14) eines Kraftfahrzeugs, umfassend mindestens eine hintere Querstrebe (16), eine vordere Querstrebe (18) und zwei Seitenflächen (20), **dadurch gekennzeichnet, dass** es umfasst:
- einen ersten Schritt, während dessen ein Dach (12) unter einer Abdeckung (25) befestigt wird, die in Bezug zu einer Stütz- und Tragestruktur (30) einer Einrichtung (26) zur festen Indexierung in Bezug zu einer bestimmten Position auf der hinteren Querstrebe (16) und einer Vorrichtung (28) zum Zentrieren in Bezug zu den Seitenflächen (20), die im Wesentlichen im Bereich der vorderen Querstrebe (18) angeordnet ist, vertikal beweglich montiert ist,
- einen zweiten Schritt, während dessen die Abdeckung (25) verschoben wird, so dass sie auf vier Pfosten (31) liegt, die zwei und zwei beiderseits der Karosserie (14) angeordnet sind,
- einen dritten Schritt, während dessen die Abdeckung (25) in Bezug zu der hinteren Querstrebe (16) mit Hilfe der Indexierungseinrichtung (26) positioniert wird,
- einen vierten Schritt, während dessen die Abdeckung (25) mit Hilfe der Zentriereinrichtung (28) zentriert wird,
- einen fünften Schritt, während dessen das Dach (12) auf die Karosserie (14) abgesenkt wird, wobei die Abdeckung (25) in Bezug zu der Stützstruktur (30) abgesenkt wird,
- einen sechsten Schritt, während dessen das Dach (12) auf der Karosserie (14) montiert wird.

## Claims

1. Arrangement (10) for positioning, prior to fastening, a roof (12) on a body (14) of a motor vehicle,
the body comprising at least a rear cross member (16), a front cross member (18) and two lateral sides (20), the arrangement comprising at least one roof grasping device intended to position the roof (12) on the body (14) of the vehicle, a cover (25), which carries the roof grasping device, and a device for centering before assembly, comprising:
- an indexing device (26) fixed with respect to a predetermined position on the rear cross member (16), the positioning arrangement being **characterized in that** it comprises:
- a device (28) for centering with respect to the lateral sides (20) which is arranged approximately at the front cross member (18), and **in that** it comprises four posts (31), which are arranged in twos on either side of the body (14) and, before the assembly and during the centering of the roof (12), are intended to hold a support structure (30) under which the cover (25) is mounted such that it can move vertically.

2. Arrangement (10) according to the preceding claim, **characterized in that** the cover (25) is mounted such that it can move vertically with respect to the support structure (30) by way of cylinders (33).

3. Arrangement (10) according to either of the preceding claims, **characterized in that** the indexing device (26) fixed with respect to the rear cross member (16) comprises at least one vertical peg (36), secured to the cover (25), which is intended to enter a vertical hole (38) in the rear cross member (16), the cover (25) carrying the fixed indexing device (26).

4. Arrangement (10) according to one of the preceding claims, **characterized in that** the centering device (28) comprises at least two elements (40), which are able to extend simultaneously transversely from a front central point (42) of the cover (25), in order to center the roof (12) with respect to the lateral sides (20) of the body (14).

5. Arrangement (10) according to the preceding claim, **characterized in that** the elements (40) consist of two tie rods (40) having the same length, the first outer ends (44) of which are intended to bear against the lateral sides (20) of the body and the second inner ends (46) of which are connected to two diametrically opposed ends of a rotating element (48), the axis of which is approximately centered on a front end (50) of the cover (25).

6. Method of assembling a roof (12) on a motor vehicle body (14) comprising at least a rear cross member (16), a front cross member (18) and two lateral sides (20), **characterized in that** it comprises:
- a first step, during which a roof (12) is fastened under a cover (25) mounted such that it can move vertically with respect to a support structure (30) carrying an indexing device (26) fixed with respect to a predetermined position on the rear cross member (16), and a device (28) for centering with respect to the lateral sides (20) which is arranged approximately at the front cross member (18),
- a second step, during which the cover (25) is moved in order for it to rest on four posts (31) arranged in twos on either side of the body (14),
- a third step, during which the cover (25) is positioned with respect to the rear cross member (16) with the aid of the indexing device (26),
- a fourth step, during which the cover (25) is centered with the aid of the centering device (28),
- a fifth step, during which the roof (12) is moved down onto the body (14) by moving the cover (25) down with respect to the support structure (30), and
- a sixth step, during which the roof (12) is assembled on the body (14).
